# EUROPEAN PATENT APPLICATION

(11) **EP 2 175 635 A1**
(43) Date of publication of application: **14.04.2010**
(21) Application number: 09171613.4
(22) Date of filing: 29.09.2009
(51) Int. Cl.: H04N 5/235

(54) **Method and apparatus for creating high dynamic range image**

(30) Priority: 10.10.2008 KR 20080099700; 23.02.2009 KR 20090014974
(71) Applicant: SAMSUNG ELECTRONICS CO., LTD., Suwon-si Gyeonggi-do 442-742 (KR)
(72) Inventor: Lee, Kang-eui, Yongin-si Gyeonggi-do (KR)
(74) Representative: D'Halleweyn, Nele Veerle Trees Gertrudis

(57) **Abstract**

A method and apparatus for creating a high dynamic range (HDR) image while preventing a ghost effect is provided. The method of creating an HDR image for a scene including an object in motion, includes detecting an area of a first image of the scene and a second image of the scene where there exists an object in motion and creating an HDR image, with respect to the area where there exists a motion, by correcting a brightness level of the first image to a brightness level of the second image to form a corrected first image. The method further includes substituting a corrected area of the corrected first image for a corresponding area of the s second image to form a substituted second image, and fusing the corrected first image and the substituted second image.

## Description

The following description relates to processing an image, and more particularly, to a technology for creating a high dynamic range (HDR) image while preventing a ghost effect due to an object or a camera in motion.

Dynamic range in terms of a digital image may be defined as the ratio between the brightest and darkest pixel values in an image. A human visual system (HVS) has a higher dynamic range than a typical digital camera or a monitor. Imaging devices typically cannot capture or display images as humans perceive them. A synthesizing technology may be used to produce an image comprising a higher dynamic range than what is processed by traditional imaging devices. An example of this type of image is a high dynamic range (HDR) image.

To produce an HDR image, a plurality of images captured with different exposure settings may be synthesized to extend the dynamic range of the image. The HDR image may be obtained by synthesizing a short exposure image (SEI) and a long exposure image (LEI). The SEI is captured with a short exposure period. A LEI is captured with a longer exposure period. In other words, a clear image can be obtained from an image with large differences in brightness between light and dark areas by capturing a first image of a light area with a short exposure period and capturing a second image of a dark area with a longer exposure period. The first image and the second image can be fused together to make a HDR image.

It may take a certain time period in capturing the SEI and the LEI. If an object or a camera moves during the time period, when the image is synthesized, a ghost effect may occur in an area where there exists motion.

Conventionally, an image synthesis is not performed if a difference of motion vectors between pixels, and/or a difference of motion vectors between images of an object is greater than a predetermined threshold. Hence, an HDR image can be typically acquired only in a motionless environment.

A method of creating an HDR image in an environment where an object or a camera may move over time has been proposed. For example, an HDR image may be obtained by selecting and processing an image with an exposure setting most similar to that of a reference image from among a plurality of images with similar exposure settings.

However, this method requires five images or more to obtain the HDR image, and may be applied to a case where two images with a large difference in exposure are used. Hence, the traditional technologies may not suitable for all types of imaging equipment, for example, for a device having a limited image memory and a system power of a typical camera.

It is therefore an object of the present invention to provide a way to obtain an HDR image that also works in devices having a limited image memory and system power. This object is addressed by the features of the method of independent claim 1 and by the features of the apparatus of independent claim 7.

In one general aspect, provided herein is a method of creating a high dynamic range (HDR) image from an image comprising an object in motion, the method including correcting a first image to be substantially equal in brightness level to a second image to create a corrected first image, wherein the first image and the second image have been captured of the same object in motion, at different exposure settings, detecting an area of the corrected first image where there exists an object in motion, and creating an HDR image by substituting the corrected area of the corrected first image where there exists an object in motion for a corresponding area of the second image, to form a substituted second image, and fusing the corrected first image and the substituted second image.

The first image may be a long exposure image (LEI) and the second image may be a short exposure image (SEI). The method may comprise creating the HDR image from the SEI and the LEI with respect to corresponding areas where there exists no motion, and creating the HDR image, with respect to the area in the LEI where there exists an object in motion, by correcting a brightness level of the LEI to a brightness level of the SEI to form a corrected LEI, and substituting a corrected area of the corrected LEI for a corresponding area of the SEI, to form a substituted SEI.

The first image may be a SEI and the second image may be a LEI. The method may comprise creating the HDR image from the SEI and the LEI with the respect to corresponding areas where there exists no motion, and creating the HDR image, with respect to the area where there exists an object in motion in the SEI, by correcting a brightness level of the SEI to a brightness level of the LEI to form a corrected SEI, and substituting a corrected area of the corrected SEI for a corresponding area of the long exposure image, to form a substituted LEI.

The detecting of the area may comprise overlapping the corrected first image and the second image to form an overlapped image, determining that the brightness of an overlapped area of the overlapped image is greater than a predetermined value, and determining that there exists an object in motion in the corrected first image.

In another aspect, provided herein is a method of creating an HDR image for a scene including an object in motion, the method including detecting an area of a long exposure image (LEI) and a short exposure image (SEI) of the scene, where there exists an object in motion, and creating an HDR image, with respect to the area of the LEI where there exists an object in motion, by correcting a brightness level of the LEI to a brightness level of the SEI to form a corrected LEI, substituting the corrected area of the corrected LEI where there exists an object in motion for a corresponding area of the short exposure image, to form a substituted SEI, and fusing the corrected LEI and the substituted SEI.

In another aspect, provided herein is an apparatus for creating an HDR image, the apparatus including a brightness corrector to correct a first image to form a corrected first image such that the corrected first image is substantially equal in brightness level to a second image, wherein the first image and the second image have been captured of an object in motion, at different exposure settings, a motion area detector to detect an area of the corrected first image and an area of the second image where there exists an object in motion, and an HDR image creator to create an HDR image by substituting a corrected area of the corrected first image for a corresponding area of the second image to form a substituted second image, and fusing the corrected first image and the substituted second image.

The first image and the second image may be a long exposure image (LEI) and a short exposure image (SEI), respectively, and vice versa. The HDR image creator may create the HDR image from the SEI and the LEI with the respect to an area where there exists no motion, and creates the HDR image, with respect to the area in the LEI where there exists an object in motion, by correcting a brightness level of the LEI to a brightness level of the SEI to form a corrected LEI, and substituting a corrected area of the corrected LEI for a corresponding area of the SEI, to form a substituted SEI.

The motion area detector may determine that with the corrected first image and the second image overlapped, there is an overlapped area that has a difference in brightness level that is greater than a predetermined value, and that an object in motion exists in the corrected first image.

Other features and aspects will be apparent from the following detailed description, the drawings, and the claims.
FIG. 1 illustrates images to explain creating an HDR image according to an exemplary embodiment.
FIG. 2 is a block diagram of an exemplary apparatus for creating an HDR image.
FIG. 3 is a graph of an example of a brightness transfer function (BTF).
FIG. 4 is a flow chart illustrating an exemplary method of creating an HDR image.

Throughout the drawings and the detailed description, unless otherwise described, the same drawing reference numerals will be understood to refer to the same elements, features, and structures. The relative size and depiction of these elements may be exaggerated for clarity, illustration, and convenience.

The following detailed description is provided to assist the reader in gaining a comprehensive understanding of the methods, apparatuses and/or systems described herein. Accordingly, various changes, modifications, and equivalents of the systems, apparatuses, and/or methods described herein will be suggested to those of ordinary skill in the art. Also, descriptions of well-known functions and constructions may be omitted for increased clarity and conciseness.

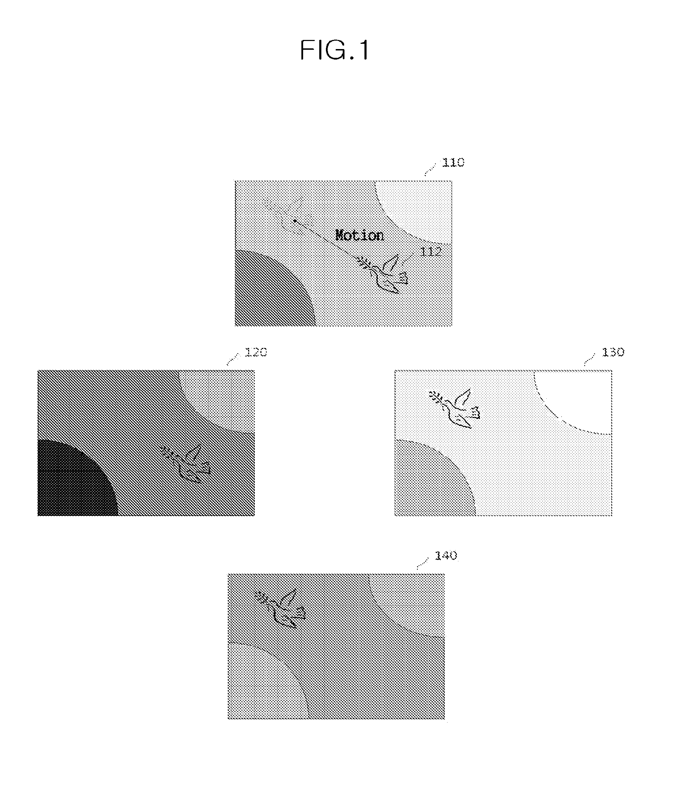

FIG. 1 illustrates images to the explain creating a high dynamic range (HDR) image according to an exemplary embodiment.

For example, to create an HDR image of a bird 112 in motion, see image 110, a short exposure image (SEI) 120 and a long exposure image (LEI) 130 may be captured. The image 110 is an image with a high dynamic range where a light area and a dark area coexist. The terms light and dark may refer to the overall brightness of the image. As referred to herein, a dark image will have less brightness than a light image.

Saturation and blooming are related phenomena that may occur in image sensors, for example, photodiodes and charge-coupled devices (CCDs), under conditions in which either the finite charge capacity of individual photodiodes, or the maximum charge transfer capacity of the CCD, is reached. Once saturation occurs at a charge collection site, accumulation of additional photo-generated charge results in overflow, or blooming, of the excess electrons into adjacent device structures. A number of potentially undesirable effects of blooming may be reflected in the sensor output, ranging from white image streaks and erroneous pixel signal values to complete breakdown at the output amplification stage, producing a dark image.

For shorter duration exposures, the sensors have less time to receive light, and thus the image is usually darker in color, for example, SEI image 120, when compared to an image having an exposure of a longer duration, for example, LEI image 130.

An HDR image is obtained by synthesizing a dark area taken from a LEI and a light area taken from a SEI. At this time, an area in the image where there exists an object in motion, for example, where a bird 112 exists, may be obtained by correcting a brightness level of the LEI 130 to a brightness level of the SEI 120, and substituting the corrected area for a corresponding area of the SEI 120. Accordingly, it is possible to obtain a clear HDR image, such as an image 140, with no ghost effect.

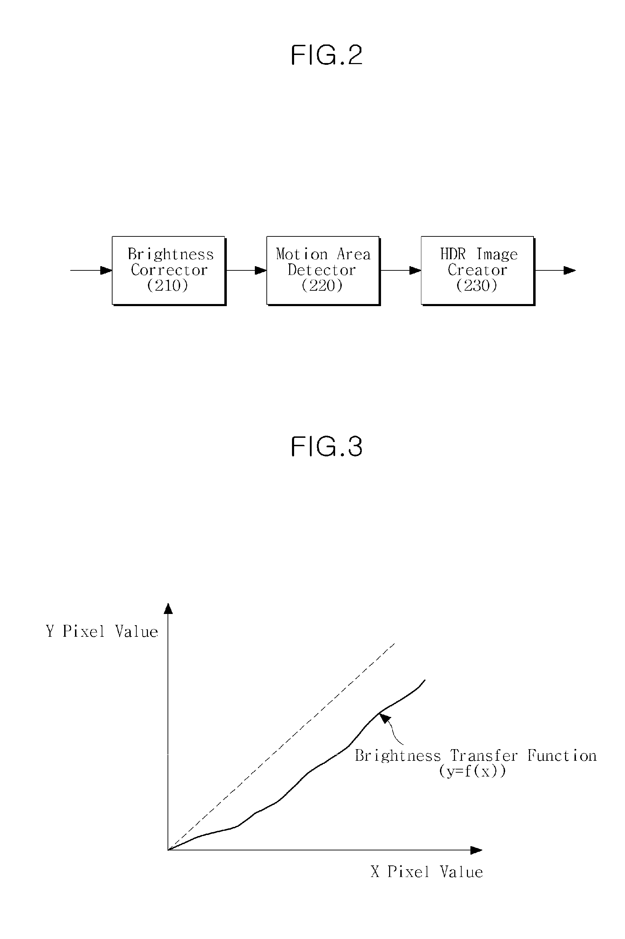

FIG. 2 illustrates an exemplary apparatus for creating an HDR image, including a brightness corrector 210, a motion area detector 220, and an HDR image creator 230.

The brightness corrector 210 is configured to correct a first image and a second image such that the first image and the second image are equal in brightness level to each other. The two images are captured of the same object, with two different exposure settings. A brightness level of the first image is adapted to a brightness level of the second image so that the two images are equal in brightness to each other.

The brightness corrector 210 may be configured to equalize brightness levels for two images having different exposure times and different brightness levels. For example, the first image may be of a longer exposure than the second image, thus the first image may have a greater brightness level than the second image. As an illustration, a brightness level of the second image may be adapted to a brightness level of the first image, a brightness level of the first image may be adapted to a brightness level of the second image, or both the brightness level of the first image and the brightness level of the second image can be adapted to a brightness level between the brightness level of the first image and the brightness level of the second image.

As will be appreciated, the corrected first image may comprise a brightness level that is equal to the first image if only the brightness level of the second image is adjusted. The corrected second image may comprise a brightness level that is equal to the second image if only the brightness level of the first image is adjusted. In some embodiments, both the first image and the second image can be adjusted such that they are equal to each other, or approximately equal to each other. In one aspect, the first image can be corrected such that the brightness level of the first image is equal to, or approximately equal to the brightness level of a second image. The resulting images may be a corrected first image and a second image. In another aspect, the second image can be corrected such that the brightness level of the second image is equal to, or approximately equal to the brightness level of the first image. The resulting images may be a first image and a corrected second image

The motion area detector 220 detects an area where there exists an object in motion from the first and second images. Because at least one image is corrected to have the same brightness level as the other image, the two images may comprise the same pixel values within a predetermined range. That is, if a difference in brightness between pixels is less than a predetermined value, images may overlap. However, if there exists an object in motion in the image, a non-overlapped area may exist. As shown in FIG. 1, the bird 112 in the SEI image 120 is at a different pixel location than the bird 112 in the LEI image 130. Thus the pixel brightness will not overlap at the points where the bird has moved.

The motion area detector 220 may be configured to determine if the images overlap. For example, the motion area detector 220 may detect the difference in brightness between the first corrected image and the second image. If a difference in brightness between pixel values is less than a certain threshold value, the motion area detector 220 determines that an overlapped area exists and that there is no object in motion. Otherwise, if the motion area detector determines that a difference in brightness between pixel values is greater than a certain threshold value, the motion area detector 220 determines that a non-overlapped area exists and that there exists an object in motion.

The HDR image creator 230 creates an HDR image from the first and second images. The HDR image creator 230 can take a corrected area of the first corrected image and substitute the corrected area of the first corrected image into the second image to create an HDR image. The HDR image creator 230 can take a corrected area of the second corrected image and substituted the corrected area into the first image to create an HDR image. The HDR image may be of an object in motion. For example, an HDR image of an object in motion may be obtained by correcting a brightness level of an LEI to a brightness level of an SEI, to achieve a corrected LEI. A corrected area of the LEI can be substituted into a corresponding area of the original SEI, to create an HDR image.

FIG. 3 illustrates an example of a brightness transfer function (BTF). For example, in a case where a brightness level of a long exposure image (LEI) is corrected to a brightness level of a short exposure image (SEI), a pixel value Y of the SEI may be obtained by corresponding a pixel value X of the LEI using a BTF, for example, y=f(x). The BTF may be a color transfer function.

In a case where a brightness level of an SEI is corrected to a brightness level of an LEI, the BTF may be performed by the inverse function of y=f(x), for example, y=f¹(x).

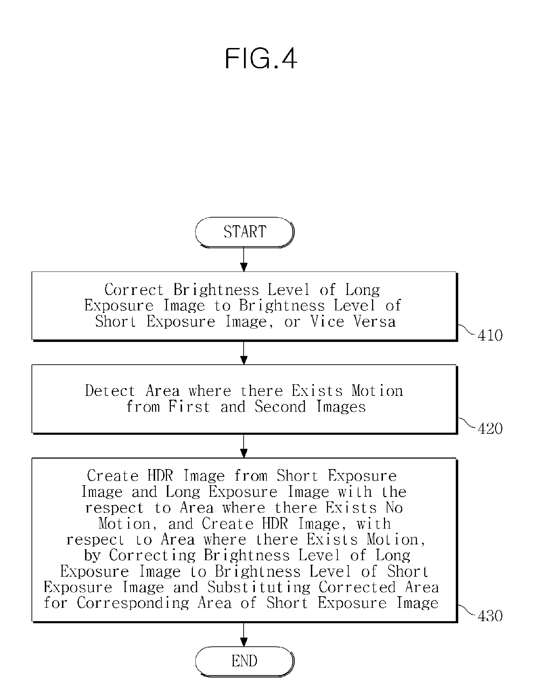

FIG. 4 illustrates a flow chart of an exemplary method of creating an HDR image.

At operation 410, for example, a first image is corrected to be equal in brightness to a second image, to form a corrected first image. The first image and the second image have been captured of the same object, at different exposure settings, for example, a short exposure and a long exposure where the long exposure has a duration that is greater than the duration of the short exposure. A brightness level of the LEI may be corrected to a brightness level of the SEI, or vice versa. That is, a brightness level of one image may be corrected to a brightness level of the other image.

At operation 420, an area where there exists an object in motion is detected from the corrected first image and the second image. For example, pixel values of the first image are made equal to pixel values of the second image, or within a predetermined range of the pixel values of the second image. The corrected first image and the second image can be overlapped with each other, and the brightness levels of the images can be compared. Where a difference in brightness level of each pixel is less than a certain value, for example, a difference in brightness level of pixel values is nearly equal to zero, the method determines that no object in motion exists in the corrected first image and the second image. Where there exists an object in motion, the images do not overlap, and the brightness level of each pixel values is not the same or nearly the same. If a difference in brightness level of each pixel value is greater than a predetermined value, the method determines that an object in motion exists in the first corrected image and the second image.

At operation 430, an HDR image is created from the corrected first image and the second image, with respect to the area where there exists an object in motion, by substituting a corrected area of the corrected first image for a corresponding area of the second image. For example, an HDR image is synthesized in an area where there exists an object in motion by correcting a brightness level of an LEI to a brightness level of an SEI and substituting the corrected area for a corresponding area of the SEI.

As apparent from the above description, it is possible to obtain an HDR image with no or less ghost effect, from a scene that includes an object in motion. Furthermore, for a scene where there exists a significant motion, it is possible to obtain an HDR image from two images having a great difference in exposure period.

According to example(s) described above, there may be provided an apparatus capable of creating an HDR image of an object in motion, while at the same time being suitable for an imaging apparatus that includes a limited amount of storage or memory.

According to example(s) described above, there may be provided an apparatus for creating an HDR image where there exists an object in motion while the apparatus is still, or the apparatus in motion while the object is still, or where both the apparatus and the object may be in motion.

The methods described above may be recorded, stored, or fixed in one or more computer-readable storage media that includes program instructions to be implemented by a computer to cause a processor to execute or perform the program instructions. The media may also include, alone or in combination with the program instructions, data files, data structures, and the like. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules in order to perform the operations and methods described above, or vice versa. In addition, a computer-readable storage medium may be distributed among computer systems connected through a network and computer-readable codes or program instructions may be stored and executed in a decentralized manner.

A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A method of creating a high dynamic range (HDR) image (140) from an image comprising an object in motion, the method comprising:
correcting (410) a first image to be substantially equal in brightness level to a second image to create a corrected first image, wherein the first image and the second image have been captured of the same object in motion (112), at different exposure settings;
detecting (420) an area of the corrected first image where there exists an object in motion (112); and
creating (430) an HDR image (140) by substituting the detected area of the corrected first image where there exists an object in motion (112) for a corresponding area of the second image, to form a substituted second image, and fusing the corrected first image and the substituted second image.

2. The method of claim 1, wherein the first image is a long exposure image (130) and the second image is a short exposure image (120).

3. The method of claim 2, wherein the creating (410) of the HDR image (140) comprises creating the HDR image (140) from the short exposure image (120) and the long exposure image (130) with respect to corresponding areas where there exists no motion, and creating the HDR image (140), with respect to the area in the long exposure image (130) where there exists an object in motion (112), by correcting a brightness level of the long exposure image (130) to a brightness level of the short exposure image (120) to form a corrected long exposure image, and substituting a corrected area of the corrected long exposure image for a corresponding area of the short exposure image (120), to form a substituted short exposure image.

4. The method of claim 1, wherein the first image is a short exposure image (120) and the second image is a long exposure image (130).

5. The method of claim 4, wherein the creating of the HDR image (140) comprises creating the HDR image (140) from the short exposure image (120) and the long exposure image (130) with the respect to corresponding areas where there exists no motion, and creating the HDR image (140), with respect to the area where there exists an object in motion (112) in the short exposure image (120), by correcting a brightness level of the short exposure image (120) to a brightness level of the long exposure image (130) to form a corrected short exposure image, and substituting a corrected area of the corrected short exposure image for a corresponding area of the long exposure image (130), to form a substituted long exposure image.

6. The method of any of the preceding claims, wherein the detecting of the area comprises overlapping the corrected first image and the second image to form an overlapped image, determining that the brightness of an overlapped area of the overlapped image is greater than a predetermined value, and determining that there exists an object in motion (112) in the corrected first image.

7. An apparatus for creating a high dynamic range (HDR) image, the apparatus comprising:
a brightness corrector (210) to correct a first image to form a corrected first image such that the corrected first image is substantially equal in brightness level to a second image, wherein the first image and the second image have been captured of an object in motion (112), at different exposure settings;
a motion area detector (220) to detect an area of the corrected first image and an area of the second image where there exists an object in motion; and
an HDR image creator (230) to create an HDR image (140) by substituting a corrected area of the corrected first image for a corresponding area of the second image to form a substituted second image, and fusing the corrected first image and the substituted second image.

8. The apparatus of claim 7, wherein the first image and the second image are a long exposure image (130) and a short exposure image (120), respectively.

9. The apparatus of claim 8, wherein the HDR image creator (230) creates the HDR image (140) from the short exposure image (120) and the long exposure image (130) with the respect to an area where there exists no motion, and creates the HDR image (140), with respect to the area in the long exposure image (130) where there exists an object in motion (112), by correcting a brightness level of the long exposure image (130) to a brightness level of the short exposure image (120) to form a corrected long exposure image, and substituting a corrected area of the corrected long exposure image for a corresponding area of the short exposure image (120), to form a substituted short exposure image.

10. The apparatus of any of claims 7 to 9, wherein the motion area detector (220) determines that with the corrected first image and the second image (120) overlapped, there is an overlapped area that has a difference in brightness level that is greater than a predetermined value, and that an object in motion (112) exists in the corrected first image.
